# EUROPEAN PATENT APPLICATION

(11) **EP 2 306 565 A1**
(43) Date of publication of application: **06.04.2011**
(21) Application number: 09769392.3
(22) Date of filing: 25.06.2009
(51) Int. Cl.: H01M 4/90, H01M 4/86, H01M 8/12, B01D 71/02, B01D 53/22

(54) **CATALYTIC LAYER FOR OXYGEN ACTIVATION ON IONIC SOLID ELECTROLYTES AT HIGH TEMPERATURE**

(30) Priority: 27.06.2008 ES 200802001
(71) Applicant: Universidad Politecnica De Valencia, 46022 Valencia (ES); Consejo Superior de Investigaciones Cientificas (CSIC), 28006 Madrid (ES)
(72) Inventor: SERRA ALFARO, José Manuel, E-46022 Valencia (ES); VERT BELENGUER, Vicente Bernardo, E-46022 Valencia (ES); ESCOLÁSTICO ROZALÉN, Sonia, E-46022 Valencia (ES)
(74) Representative: Pons Ariño, Angel
(86) International application number: PCT/ES2009/070255
(87) International publication number: WO 2009/156546

(57) **Abstract**

The present invention relates to a catalytic porous layer for oxygen activation which may be utilised in solid oxide fuel cells (SOFCs) and in dense ceramic membranes for oxygen separation at high temperature. Said porous layer is principally formed by a mixed electron and oxygen ion conductive material possessing a structure selected from among structures of the simple perovskite or double perovskite type or structures related to perovskite, that is to say: structures of the Ruddlesden-Popper, Dion-Jacobson and Aurivillius type. The composition of such crystalline phase has the following general formula:

[(BaaA'bA"cA"'1-a-b-c)1-xBx]N [Fe1-y-zCyDz]M OW.

## Description

### TECHNICAL FIELD OF THE INVENTION

The present invention relates to the field of catalysis and electrocatalysis applied to energy production, gas separation and processing of basic chemicals, specifically, the invention focuses on the field of high temperature fuel cells and membranes for oxygen separation at a high temperature.

### STATE OF THE ART OF THE INVENTION

Fuel cells are electrochemical devices that make it possible to obtain electricity directly from chemical energy contained in fuels such as hydrogen or hydrocarbons, in contrast to thermal processes of energy production from fossil fuels. Fuel cells enable a highly efficient use of fuel chemical energy, it being possible to reach up to 70% efficiency, which is an improvement of up to 200% compared to current combustion-based technologies. This increased use of energy resources can consequently reduce CO₂ emissions per kWh produced, this aspect being increasingly more significant from a socio-economic standpoint. In this sense, the use of fuel cells can reduce the environmental impact exerted by energy generation processes, it being possible to virtually eliminate emissions of SOₓ and NOₓ while reducing CO₂ production depends on the type of fuel used. Moreover, another major advantage of fuel cells is their silent operation (no moving parts), which allows the reduction of noise pollution in urban or independent generator sets.

Among the different concepts of fuel cells, the cells based on solid oxide (SOFC) had the lowest levels of electrochemical and mechanical degradation, since the electrolyte is a stable solid element (an ion conductor). Equally important is the fact that these cells achieve best efficiency, and because of the operating conditions, it is possible to integrate them with microturbines in high-performance cogeneration systems. These cells have other advantageous aspects compared to other battery designs, such as reduced degradation over time of operation, the possible use of different fuels such as hydrogen, ethanol or natural gas, and tolerance of gases such as CO or NOₓ. In view of the operating temperatures (600ºC-1,000ºC), use is restricted to large vehicles and stationary energy production, reaching typical power values ranging from 5 kW to 10 MW.

In the past two years, the technology required for mass production and operation for long periods has reached a significant level of maturity. However, the high cost of energy production systems means that they are only launched onto the market for specific applications where price is not the limiting factor. Thus, efforts in research and development of this technology have focused on (a) the reduction of costs of materials and manufacturing processes of these devices and (b) the reduction of the operating temperature, so as to reduce prices of the construction materials, maintenance costs and the deterioration rate. These objectives would increase the efficiency of fuel cells, i.e. the power density per cell area (kW/m²), which would in turn reduce the price and size of the module, or alternatively lower the final cost of kilowatts per hour.

The main electrochemical limitation on the efficiency of solid oxide fuel cells can be found in the phenomena occurring at the cathode, where hydrogen is used as fuel. Thus, the total power of the cell can be substantially increased if such physical and chemical processes are improved. The presently used porous cathodes are composed of electrical conductor ceramic materials and, in some cases, oxygen conductors in solid state, thus materials preferred for their stability and catalytic activity are mixed oxides with a perovskite structure and derived structures, such as La_{0.6}Sr_{0.4}Fe_{0.8}Co_{0.2}O_{3-δ} -LSFC-, and materials composed of mixtures of such perovskite particles and particles of the material composing the electrolyte. The processes that occur at the cathode during operation of the electrochemical cell are (S. B. Adler, Chemical Reviews 104 (2004) 4791-4843): (a) adsorption of O₂ on the surface of the particles, (b) dissociation of O₂, (c) (catalytic) reduction of atomic oxygen with two electrons to give O²⁻, (d) transport of anion O²⁻ to the electrolyte through the internal crystal lattice of the particles and (e) jump of the O²⁻ anion to the solid electrolyte. Consequently, the materials making up the cathode must have high electrical and ionic conductivity, good oxygen adsorption capacity, catalytic activity for the dissociation and reduction of O₂, and compatibility and good adhesion with the electrolyte. Of the various methods to improve the overall activity of the cathode, the following should be highlighted: (a) improving the conductivity and catalytic activity by studying different crystal structures and the elemental composition of glass, (b) modifying or activating the surface of crystalline material particles (perovskite), and (c) improving the specific area of the cathode available for electrochemical processes, reducing both ohmic and polarization resistances.

Another interesting additional application of catalytic materials with oxygen and electron mixed conduction properties is their use as catalysts for oxygen activation in dense membranes for oxygen separation. These membranes allow the separation of oxygen from air at high temperatures. Its application in thermal power stations (oxy-fuel process) would enable natural gas (or coal) combustion with pure oxygen, obtaining only CO₂ and water as products. Given the absence of N₂ in combustion gas, CO₂ separation is very simple, it being possible to later liquefy and store it. This concept of thermal power station would minimize CO₂ emissions, as stipulated in the Kyoto protocol. However, the separation efficiency of current membranes cannot reach the levels required for industrial implementation (F_{O2}> 10 ml/min). The main part of the oxygen membrane is a gas-impermeable film and preferably with a thickness under 50 µm. This film is composed of a mixed conductive material of electrons and oxygen ions in the solid state. Materials commonly used for said application are perovskites with compositions such as La_{0.68}Sr_{0.3}Fe_{0.8}Co_{0.2}O_{3-L} or Ba_{0.5}Sr_{0.5}Fe_{0.2}Co_{0.8}O_{3-L}. This thin film is deposited on a porous support, compatible from a chemical and mechanical viewpoint, therefore, materials such as doped cerium oxide or iron-based perovskites are commonly used. As in the case of SOFC fuel cells, the maximum flow of oxygen through the membrane is limited by surface processes (adsorption, dissociation and oxygen reduction) for thicknesses under 50 µm and temperatures above 600ºC. Consequently, efficient electrodes in oxygen activation in fuel cells at a high temperature can be directly applied to membranes to improve oxygen exchange processes on one or both surfaces of the membrane, thereby increasing the flow of pure O₂ obtained through the membrane.

### DESCRIPTION OF THE INVENTION

The present invention relates to a catalytic porous layer for oxygen activation that can be used in solid oxide fuel cells, (SOFC) and dense ceramic membranes for oxygen separation at a high temperature. This porous layer is mainly composed of a mixed electron and oxygen ion conductive material and has a structure selected from among simple perovskite or double perovskite structures or perovskite-related structures, i.e. structures of the Ruddlesden-Popper, Dion-Jacobson and Aurivillius type. The composition of this crystalline phase has the following general formula:

[(BaₐA'_{b}A"_{c}A'"_{1-a-b-c})₁₋ₓBₓ]_{N}[Fe_{1-y-z}C_{y}D_{z}]_{M}O_{W}

where:
A', A" and A'" are elements selected from La, Ce, Pr, Nd, Sm, Eu, Gd, Tb, Dy, Ho, Er, Tm, Yb, Lu and Li
and provided fulfilment of the condition A' ≠ A" ≠ A'"
B is an element selected from Sr, Ca and combinations thereof.
C is an element selected from Co, Cu, Ni, Mn, Zr, Ti, Cr and combinations thereof,
D is an element selected from Pd, Ag, Rh, Pt and combinations thereof,
0.05 ≤ a ≤ 0.75;
0.05 ≤ b ≤ 0.75;
0 ≤ c ≤ 0.75;
and provided fulfilment of the condition a+b+c ≤ 1
0.2 ≤ x ≤ 0.8;
0.1 ≤ y ≤ 1;
0 ≤ z ≤ 0.1;
and provided fulfilment of the condition y+z ≤ 1
N/M ≥ 0.98;
W ≥ 2.5

The porous layer comprises crystalline particles with particle sizes ranging from 0.1 to 3 microns, while the pore size distribution is wider, ranging from 0.05 microns to 20 microns. The specific surface area of the porous catalytic coating is in the range of 0.1 to 80 m²/g.

In addition, the catalytic porous layer has a thickness of between 5 and 80 microns, preferably between 10 and 40 microns.

An advantageous aspect of this invention is the improved catalytic activity of crystalline material as regards the state of the art. In the case of the application of the solid oxide fuel cells as a cathode, numerous electrochemical activities have been described which use materials such as La_{0.6}Sr_{0.4}Fe_{0.8}Co_{0.2}O_{3-δ} (Patent Application US2007/0148529A1 and US6,794,075) or Ba_{0.5}Sr_{0.5}Fe_{0.2}Co_{0.8}O_{3-δ} (M. Shao and S. M. Haile, Nature 431 (2004) 170). Double perovskites of the type GdBaCo₂O_{5+δ} have also been disclosed (A. Tarancón et al, Journal of Power Sources 174 (2007) 255-263) and perovskite materials of the Ruddlesden-Popper series, Nd₂NiO_{4+δ} (F. Mauvy et al., Solid State Ionics 158 (2003) 17-28). One of the novelties of this invention is the simultaneous combination of three or more metals with a large ionic radius, greater than 0.09 nm with coordination 12 in the perovskite structure, which have interesting catalytic properties in oxygen activation at a high temperature. The effect of mixing several metals with coordination 12 in the perovskite and of redox activity of the metals Fe, C and D gives a favourable activity for oxygen activation at temperatures ranging from 450 to 850 ºC. Especially interesting is the potential application of the catalytic layer of the present invention at the so-called intermediate temperatures between 450 and 750 ºC for the operation of solid oxide cells, because it allows to extend the scope of this type of cell to electric power and heat production from hydrogen and hydrocarbons, while reducing both production and operational prices and the degradation rate of the system.

The combination of metals with interesting catalytic properties results in a highly increased catalytic activity and far higher than that expected by simple linear combination of the catalytic activity by separate metals (J. M. Serra et al. Journal of the Electrochemical Society 55 (2008), B207 - B214). Therefore, the object of this invention is novel because it has required extensive experimental work, due to the complexity of multicomponent interactions and synergistic effects of different "catalytic" metals with coordination 12 in the perovskite structure and the grain boundaries during the catalytic process of oxygen activation at a high temperature.

Preferred catalytic metals in coordination position 12 in the perovskite are: (1) barium, since it reduces the electrode activation energy and improves molecular oxygen adsorption and dissociation processes, (2) lanthanum, given its ability of forming superoxide and peroxide species, and (3) metals such as praseodymium, cerium, samarium, europium, gadolinium, terbium and ytterbium, combining a redox couple and a suitable ionic radius for accommodation in the perovskite structure. On the other hand, preferred catalytic metals for the octahedral position of the perovskite are iron, cobalt, copper and palladium.

In another embodiment of the present invention, the catalytic porous layer comprises the multicomponent crystalline material generally defined above by the formula [(BaₐA'_{b}A"_{c}A"'_{1-a-b-c})₁₋ₓBₓ]N[Fe_{1-y-z}C_{y}D_{z}]_{M}O_{W} and also a second crystalline material, physically mixed, which has predominantly pure ionic conduction properties. This second crystalline material is preferably a pure ionic conductive oxide. A selection of these materials may be, without being limited thereto, the following:
- Cerium or zirconium oxide with fluorite-type structure and doped with yttrium, scandium and other rare earths such as gadolinium or samarium.
- Gallium, magnesium and lanthanum mixed oxide, with a simple perovskite-type structure, such as La_{0.8}Sr_{0.2}Ga_{0.8}Mg_{0.2}O₃.
- Barium or strontium cerate, zirconate, titanate or thorate, with a simple perovskite-type structure, and doped with yttrium, scandium and other rare earths, such as BaCe_{0.9}Yb_{0.1}O₃ and BaTh_{0.9}Gd_{0.1}O₃
- Rare earth tungstates, optionally doped with calcium, such as La_{5.94}Ca_{0.06}WO₁₂.
- Rare earth orthoniobates and orthotantalates and, optionally doped with calcium, such as for example La_{0.98}Ca_{0.02}NbO₄ and La_{0.98}Ca_{0.02}TaO₄

In another embodiment of the present invention, the crystalline material or materials of the catalytic porous layer for oxygen activation is impregnated with one of the following metals Pd, Ag, Rh, Pt and combinations thereof at a rate less than or equal to 1 % by weight.

The crystalline material defined

[(BaₐA'_{b}A"_{c}A'"_{1-a-b-c})₁₋ₓBₓ]_{N}[Fe_{1-y-z}C_{y}D_{z}]_{M}O_{W}

can be prepared by the following manufacturing methods: (a) solid state reaction between simple oxides or simple carbonates of different metals at high temperatures (700-1300 °C), (b) the process of metal complexation in aqueous or organic solution followed by drying and optionally a polymerization reaction, and finally calcined at a temperature above 600 °C to remove traces of organic matter and allow crystallization of the mixed oxide in the perovskite or perovskite family type structure (US 3,330,697 and US 6,752,979), (c) hydrothermal synthesis in an aqueous medium or with organic solvents, using convection, radiation, induction or microwave heating furnaces, (d) physical vapour deposition (PVD) or chemical vapour deposition (CVD), (e) reactive grinding and (f) spray drying.

Appropriate methods for the deposition of the catalytic porous layer under the present invention include: silkscreen printing, electroplating, thermal spray, electro-spray, plasma spray, spin-coating, tape-casting, dip-coating, buffering, physical vapour deposition (PVD) or chemical vapour deposition (CVD).

A preferred embodiment of the present invention is a porous layer between 20 and 40 microns thick, composed of grains with sizes in the range of 0.1-0.8 microns and a composition [(Baₐ La_{b} Pr_{c})₁₋ₓSr_{x]N}[Fe_{1-y-z}Co_{y}Pd_{z}]_{M}O_{W} with simple perovskite structure. A preferred method for the manufacture of the layer is silkscreen printing, whereby the silkscreen ink of the compound [(BaₐA'_{b}A"_{c}A'"_{1-a-b-c})₁₋ₓBₓ]_{N}[Fe_{1-y-z}C_{y}D_{z}]_{M}O_{W} is deposited on a solid electrolyte ionic conductor and is then baked in air in the temperature range from 900 to 1100 ºC for a variable time between 1 and 12 hours using a heating ramp range of 2 K/min.

Another object of this invention is the use of the porous layer as a cathode of a solid oxide fuel cell when deposited on a pure solid electrolyte ionic conductor. The electrolyte can be a conductor of oxygen ions or protons, preferably oxygen ions. The electrolyte can be supported on a porous anode substrate, such as a composite material of the type YSZ/NiO, CGO/NiO and LSGM/NiO if the thickness is less than 25 microns. Likewise, if the electrolyte is thick (a thickness greater than or equal to 100 microns), it can act in itself as a support for the electrodes: the cathode described above according to the present invention and the anode with compositions such as YSZ/Ni, CGO/Ni, doped lanthanum chromites, double perovskites based on Sr₂Mg₁₋ₓMnₓMoO₆₋ₓ, YSZ/Cu, CGO/Cu, etc. The electrolyte can be composed of several layers of different materials with ionic conductivity, as the use of protective coatings or contact layers between the electrolyte and electrodes is common (S. Uhlenbruck et al., Thin Solid Films 515 (2007) 4053 -4060). The materials used as electrolytes of the fuel cell on which the cathode presented herein is deposited include at least one of the following materials:
- Cerium or zirconium oxide with fluorite-type structure and doped with yttrium, scandium, cobalt or other rare earths such as gadolinium or samarium
- Gallium magnesium and lanthanum oxide with a simple perovskite-type structure, such as La_{0.8}Sr_{0.2}Ga_{0.8}Mg_{0.2}O₃
- Barium or strontium cerate, zirconate, titanate or thorate with a perovskite-type structure and doped with yttrium, scandium and other rare earths, such as BaCe_{0.9}Yb_{0.1}O₃ and BaTh_{0.9}Gd_{0.1}O₃
- Rare earth tungstate, optionally doped with calcium, such as La_{5.94}Ca_{0.06}WO₁₂
- Rare earth orthoniobates and orthotantalates, optionally doped with calcium, such as La_{0.98}Ca_{0.02}NbO₄ and La_{0.98}Ca_{0.02}TaO₄

Another preferred embodiment of the present invention is the deposition of the porous catalytic layer with a composition [(BaₐA'_{b}A"_{c}A'"_{1-a-b-c})₁₋ₓBₓ]_{N}[Fe_{1-y-z}C_{y}D_{z}]_{M}O_{W} on a pure ionic electrolyte with the configuration and composition described above which is covered with a dense and thin layer (0.1 - 2 µm) of a material with mixed ionic and electronic conductivity. Preferably, the composition of the dense coating of the electrolyte has the same composition as the cathode, i.e.

[(BaₐA'_{b}A"_{c}A'"_{1-a-b-c})₁₋ₓBₓ]_{N}[Fe_{1-y-z}C_{y}D_{z}]_{M}O_{W}.

A preferred embodiment includes the deposition of a cathode according to this invention on a YSZ electrolyte of 10 microns on an anodic support of YSZ/NiO, and a protective layer between the YSZ electrolyte and gadolinium-doped cerium oxide cathode, preferably with a thickness of 0.5 microns and with a density greater than 95%.

According to another particular embodiment, the porous layer object of the present invention can act as a catalytic coating activating the oxygen exchange in oxygen ion-permeable dense ceramic membranes. The operating temperature of such membranes according to the present invention is between 500 and 950 ºC. The catalytic coating may be deposited (a) on the membrane side with a greater partial pressure of oxygen (b) on the membrane side with a lower partial pressure of oxygen, or (c) on both sides. The application of the catalytic layer can increase the oxygen exchange rate, which is particularly relevant when the thickness of the oxygen ion-permeable dense layer is below 100 microns. In this situation, the total flow of oxygen is usually limited by the oxygen exchange, mainly on the membrane side with a lower partial pressure.

The material the dense membrane on which the activation catalytic layer is deposited consists of a mixed conductor of oxygen ions and electrons and is generally a crystalline solid, which may comprise one of the following materials or physical mixtures thereof (J. Sunarso et al. Journal of Membrane Science 320 (2008) 13-41):
- Cerium oxide with a fluorite-type structure and doped with yttrium, cobalt or other rare earth such as praseodymium or samarium.
- Simple perovskites based on iron and strontium, and which may contain barium, cobalt, zirconium, titanium, nickel, copper, manganese, rare earths, silver, palladium or chromium in its crystal structure.
- Perovskites of the Ruddlesden-Popper series based on nickel and rare earth (US 6,503,296), which can be doped with other transition metals such as cobalt and iron.

The oxygen ion-permeable dense membrane and catalytically activated with the porous layer described herein finds application in (1) the separation of oxygen at a high temperature, (2) the activation of hydrocarbon as a membrane reactor for reactions such as selective oxidation of methane, dehydrogenation of ethane to ethylene and of propane to propylene, methane and ethane aromatization, selective oxidation of ammonia, Andrussow reaction to produce HCN from methane and ammonia, etc.

### BRIEF DESCRIPTION OF THE FIGURES

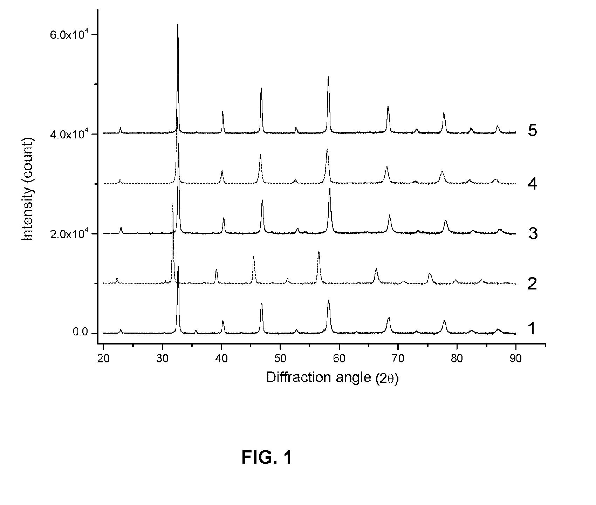

**Figure 1** shows an X-ray diffractogram of powdered materials composing embodiments of catalytic layers. The catalytic layers composed of materials (1), (2) and (3) are not in accordance with this invention, while the catalytic layers composed of materials (4) and (5) are in accordance with the present invention

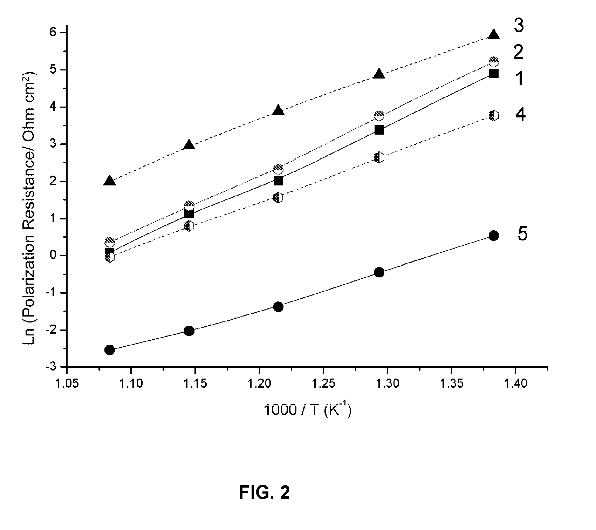

**Figure 2** shows the Arrhenius plot for porous coatings corresponding to the materials (1) to (5), when characterized by impedance spectroscopy using cells in a symmetric configuration. This diagram represents the natural logarithm of the specific polarization resistance (Ohm cm²) corresponding only to the porous electrode on the x-axis and the inverse of the temperature in Kelvin degrees on the vertical axis. The cathodes composed of the materials (1), (2) and (3) are not in accordance with this invention, while the catalytic layers composed of materials (4) and (5) are in accordance with the present invention.

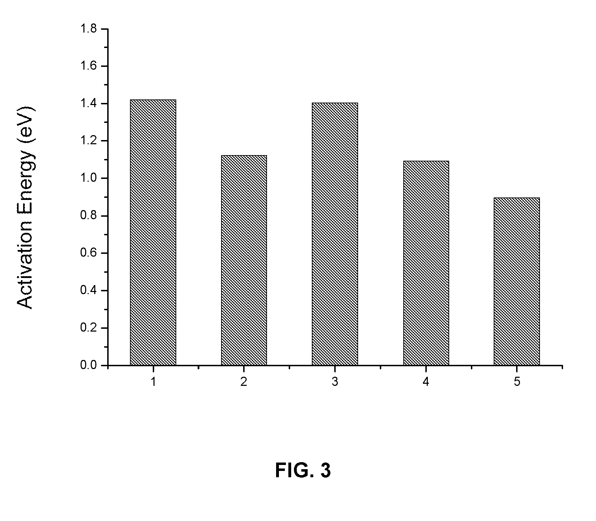

**Figure 3** shows the values of activation energy (eV) obtained for the variation with the specific polarization resistance temperature of the porous layers for materials (1) to (5), when they were characterized by impedance spectroscopy.

### EXAMPLES

The following examples are intended to illustrate aspects of the invention but in no way to limit the scope thereof.

### Example 1: Preparation of catalytic layers on solid electrolytes

Using the complexation- polymerization method, five crystalline materials were prepared with the following compositions:
(1) La_{0.6}Sr_{0.4}Fe_{0.8}Co_{0.2}O_{3-δ}
(2) Ba_{0.6}Sr_{0.4}Fe_{0.8}Co_{0.2}O_{3-δ}
(3) Pr_{0.6}Sr_{0.4}Fe_{0.8}Co_{0.2}O_{3-δ}
(4) (Ba_{0.25}La_{0.75})_{0.6}Sr_{0.4}Fe_{0.8}Co_{0.2}O_{3-δ}, according to the present invention
(5) (Ba_{0.25}La_{0.375}Pr_{0.375})_{0.6}Sr_{0.4}Fe_{0.8}Co_{0.2}O_{3-δ}, according to the present invention.

The materials were prepared as follows: stoichiometric amounts of nitrates of the different metals of the compound to be synthesized were dissolved in water. Then citric acid was added in a 2:1 molar ratio with respect to the total moles of cations, and thereafter ethylene glycol was added in a 4:1 molar ratio with respect to total moles of cations. The final solution was heated gradually to 150 °C until a viscous and spongy gel is obtained. Finally, the gel is pyrolyzed at 1000 °C for 2 hours using a heating ramp rate of 2 K/min. Figure 1 shows the X-ray diffraction patterns for the five samples prepared. The five materials have a crystalline structure of a simple perovskite type almost free of impurities. Variations in the angles of the diffraction peaks between the different materials are due to the varying size of unit cell, which is mainly correlated in this case to the barium content, since this is the most voluminous cation of all cations accommodated in the coordination position 12 of the simple perovskite.

The materials obtained were ground in acetone for 15 hours using a ball mill (balls of stabilized zirconium oxide). The particle size obtained was in the range of 0.2 to 0.6 microns for most of the particles. Silkscreen printing inks were then prepared using terpineol (47% by weight) as medium and ethylcellulose (3% by weight) as plasticizer.

Using the five inks, the relevant porous layers were deposited on dense electrolytes composed of cerium oxide compounds doped with gadolinium (Ce_{0.8}Gd_{0.2}O_{1.9}) with a thickness of 800 microns. The deposited porous layers were dried at 60 °C for 4 hours and then baked at 1060 ºC for 2 hours.

### Example 2: Electrochemical characterization of catalytic layers on solid electrolytes

The electrochemical characterization was performed by impedance spectroscopy using cells in a symmetrical configuration. To this end, Ce_{0.8}Gd_{0.2}O_{1.9} electrolytes were coated on both sides with each of the five screen printing inks under the previous process. The study was carried out under air flow for temperatures of 450, 500, 550, 600 and 650 ºC. The scanning frequency range was 0.01 to 1000000 Hz and the electrical contact was made using a platinum mesh. This study allows the evaluation of the catalytic activity of the layers both for use as solid oxide fuel cell cathodes and for the activation of oxygen ion-permeable dense membranes.

Figure 2 shows the Arrhenius plot for the five porous electrodes corresponding to the materials (1) to (5). This diagram represents the natural logarithm of the specific resistance (Ohm cm2) of polarization corresponding only to the porous electrode in the x-axis and the inverse of the temperature on the vertical axis. The specific resistance for layers of materials (1), (2) and (3) are significantly greater than the specific resistance obtained for the layers corresponding to materials (4) and (5) according to the present invention. It may be clearly asserted that the combination of metals Ba-La, and Ba-La-Pr in position A of the perovskite is advantageous and significantly reduces the electrode polarization, i.e. increases the electrocatalytic activity with respect to materials with a single element in the coordination position 12 of the simple perovskite, in addition to strontium. This advantageous combination of elements is more evident for low temperatures (450-500 ºC) for the case of material (4). Even more evident is the improvement provided by the ternary combination Ba-La-Pr of material (5), since at 500 ºC there is a reduction by a factor of 50 of the polarization resistance obtained for the three materials (1), (2) or (3). (Note the logarithmic scale in Figure 2)

Figure 3 shows the activation energy in electron volts obtained for the five electrodes prepared. In all cases the linear adjustment is good (see also the Arrhenius diagram of Figure 2), whereby it seems that the mechanism limiting the operation of the cathode remains constant throughout the range of temperatures. The lower activation energies were obtained for cathodes containing barium, although the lowest activation energy was obtained with the cathode with the ternary combination Ba-La-Pr. This aspect again shows that by combining two or preferably three catalytic metals in position A of the perovskite (Coordination 12) it is possible to synergistically increase and enhance catalytic effects which can be observed, although to a much lesser extent, separately . The additional advantage of the cathodes according to this invention, with high catalytic activity and reduced activation energy, is that the activity does not decline so rapidly as it does for those cathodes with higher activation energy, and therefore these cathodes are particularly suitable for application in the range of moderate temperatures (650-500 °C)

## Claims

1. A catalytic porous layer for oxygen activation in solid oxide fuel cells and in oxygen-permeable dense ceramic membranes, **characterized in that** it comprises at least one electron and oxygen ion mixed conductive material, with a structure selected from the simple perovskite-type structure double perovskite-type structure, or structures of the Ruddlesden-Popper, Dion-Jacobson and Aurivillius family and whose composition has the following general formula:
[(BaₐA'_{b}A"_{c}A'"_{1-a-b-c})₁₋ₓBₓ]_{N}[Fe_{1-y-z}C_{y}D_{z}]_{M}O_{W}
where:
A', A" and A'" are elements selected from La, Ce, Pr, Nd, Sm, Eu, Gd, Tb, Dy, Ho, Er, Tm, Yb, Lu and Li
and provided fulfilment of the condition A' ≠ A" ≠ A'"
B is an element selected from Sr, Ca and combinations thereof,
C is an element selected from Co, Cu, Ni, Mn, Zr, Ti, Cr and combinations thereof,
D is an element selected from Pd, Ag, Rh, Pt and combinations thereof,
0.05 ≤ a ≤ 0.75;
0.05 ≤ b ≤ 0.75;
0 ≤ c ≤ 0.75;
and provided fulfilment of the condition a+b+c ≤ 1
0.2 ≤ x ≤ 0.8;
0.1 ≤ y ≤ 1;
0 ≤ z ≤ 0.1;
and provided fulfilment of the condition y+z ≤ 1
N/M ≥ 0.98;
W ≥ 2.5

2. A catalytic porous layer according to claim 1, **characterized in that** the composition takes the following formula
[(BaₐLa_{b}Pr_{c})₁₋ₓSrₓ]_{N}[Fe_{1-y-z}Co_{y}Pd_{z}]_{M}O_{W}

3. A catalytic porous layer according to one of claims 1 and 2, **characterized in that** the mixed conductor material has a simple perovskite structure.

4. A catalytic porous layer according to one of claims 1 and 2, **characterized in that** the crystalline material whose composition is
[(BaₐA'_{b}A"_{c}A'"_{1-a-b-c})₁₋ₓBₓ]_{N}[Fe_{1-y-z}C_{y}D_{z}]_{M}O_{W}
further comprising another crystalline material which is a pure ionic conductor oxide.

5. A catalytic porous layer according to one of the preceding claims, **characterized in that** the crystalline material or materials which it is composed of is impregnated with at least one metal selected from Pd, Ag, Rh, Pt and combinations thereof in a percentage less than or equal to 1% by weight.

6. A catalytic porous layer according to one of the preceding claims, **characterized in that** the crystalline material or materials which it is composed of have a particle size that is in the range of 0.1 to 3 microns.

7. A catalytic porous layer according to one of the preceding claims, **characterized in that** the crystalline material or materials which it is composed of have a specific surface area which is in the range of 0.1 to 80 m²/g.

8. A catalytic porous layer according to one of the preceding claims, **characterized in that** it has a pore size between 0.05 and 20 microns.

9. A catalytic porous layer according to one of the preceding claims, **characterized in that** it has a thickness of between 5 and 80 microns.

10. A catalytic porous layer according to claim 9, **characterized in that** it has a thickness of between 10 and 40 microns.

11. Use of a porous layer as described in claims 1 to 10, for oxygen activation in solid oxide fuel cells and oxygen-permeable dense ceramic membranes.

12. Use of a porous layer according to claim 11 for oxygen activation in solid oxide fuel cells.

13. Use of a porous layer according to claim 12, **characterized in that** said layer is supported on a pure ionic solid electrolyte.

14. Use of a porous layer according to claim 13, **characterized in that** it is supported on a pure solid electrolyte oxygen ion conductor.

15. Use of a porous layer according to claim 13, **characterized in that** it is supported on a pure solid electrolyte proton conductor.

16. Use of a porous layer according to claim 12, **characterized in that** it is supported on a solid electrolyte having at least one of the following crystalline materials:
- Cerium or zirconium oxide with a fluorite-type structure and doped with yttrium, scandium or other rare earth,
- Gallium, magnesium and lanthanum mixed oxide with a simple perovskite-type structure,
- Barium or strontium cerate, zirconate, titanate or thorate with a simple perovskite-type structure, and doped with yttrium, scandium or other rare earth,
- Rare earth tungstates, optionally doped with calcium.

17. Use of a porous layer according to one of claims 11 to 16, **characterized in that** the operating temperature is between 450 and 750 ºC.

18. Use of a porous layer according to claim 11 for oxygen activation in oxygen-permeable ceramic membranes.

19. Use of a porous layer according to claim 18, **characterized in that** the operating temperature is between 500 and 950 ºC.

20. Use of a porous layer according to claims 18 and 19, as a membrane catalytic reactor in a reaction selected from selective oxidation of methane, ethane dehydrogenation to ethylene and of propane to propylene, methane and ethane aromatization, selective oxidation of ammonia, Andrussow reaction to produce HCN from methane and ammonia.
